# EUROPÄISCHE PATENTSCHRIFT

(11) **EP 1 788 320 B1**
(45) Veröffentlichungstag und Bekanntmachung des Hinweises auf die Patenterteilung: **18.01.2012**
(21) Anmeldenummer: 05025247.7
(22) Anmeldetag: 18.11.2005
(51) Int. Cl.: F24H 3/06, F24H 9/00, F28F 1/16

(54) **Wärmetauschereinsatz**
Heat exchanger
Echangeur de chaleur

(43) Veröffentlichungstag der Anmeldung: 23.05.2007
(73) Patentinhaber: Truma Gerätetechnik GmbH & Co. KG, 85640 Putzbrunn (DE)
(72) Erfinder: Armbruster, Uwe, 80689 München (DE); Laux, Wilhelm, 81829 München (DE); Listl, Hans-Jürgen, 85386 Eching (DE); Schreckenbach, Stephan, 81543 München (DE)
(74) Vertreter: Müller - Hoffmann & Partner

(56) Entgegenhaltungen:
- DE-A1- 4 116 692
- DE-U1- 9 100 961

## Beschreibung

Die Erfindung betrifft nach dem Oberbegriff des Patentanspruchs 1 einen Wärmetauschereinsatz, insbesondere für Luftheizgeräte für Kleinräume in Caravans, Wohnmobilen, Booten oder dergleichen.

Ein wie in DE 41 16 692 A1 beschriebener und als Strangpressteil ausgebildeter bekannter Wärmetauschereinsatz weist einen Innenmantel mit radial abstehenden Innenrippen und Außenrippen auf, wobei diese Innen- und Außenrippen am Innenmantel in übereinstimmender Anordnung einander gegenüberliegend vorgesehen sind. Die Außenrippen weisen Querstege auf, wobei die Querstege von direkt benachbarten Außenrippen auf gleicher radialer Höhe positioniert sind.

Ein derartiger Wärmetauschereinsatz bringt jedoch mehrere Nachteile mit sich. Einerseits bilden sich bei diesem herkömmlichen Profil der Querstege Kernströmungen zwischen benachbarten Außenrippen aus, die nicht an die Wand gelangen und daher nicht zum Wärmetransport beitragen. Dadurch wird die Effizienz des Wärmeaustauschers verschlechtert. Ebenso sind als Strangpressteil ausgebildete Wärmetauscher hinsichtlich ihrer Geometrie an die Vorgaben der DIN 17 615 Teil 2 gebunden. Diese Industrienorm gibt Vorgaben hinsichtlich der Seiten- und Flächenverhältnisse eines Strangpressteils, um eine Überbeanspruchung des Werkzeugs zu verhindern. Hiervon abweichende Seiten- und Flächenverhältnisse lassen sich, wenn überhaupt, nur mit einem erhöhten Aufwand bei der Werkzeugherstellung realisieren. Da bei obigem bekannten Wärmetauscher die Querstege direkt benachbarter Außenrippen sich jeweils auf einer gemeinsamen Umfangslinie, d. h. einer Kreislinie bei rundem Innenmantel, gegenüberliegen, können die Außenrippen lediglich bis zu einem gemäß DIN 17 615 Teil 2 begrenzten Abstand zueinander gerückt werden, da ansonsten das zulässige Seitenverhältnis oder das zulässige Flächenverhältnis überschritten wird und eine Überbeanspruchung des Werkzeugs droht. Günstig wäre es jedoch, direkt benachbarte Außenrippen möglichst nahe aneinander zu rücken, um dadurch die Anzahl der Außenrippen zu vergrößern und folglich eine möglichst große Fläche zum Wärmeaustausch durch die Außenrippen bereitzustellen als auch aufgrund der hieraus resultierenden kleineren Kanalquerschnitte der zu erwärmenden Luftströme die Ausbildung von Kernströmungen zu verringern.

In Fig. 1 ist eine schematische Aufsicht auf einen Teil eines aus der DE 41 16 692 A1 bekannten Wärmetauschereinsatzes gezeigt.

Dem Verständnis der Erfindung dienend ist lediglich ein kleines Kreissegment eines Wärmetauschereinsatzes 1 mit zwei direkt benachbarten Außenrippen 2 dargestellt. Die Außenrippen 2 stehen von einem zylinderförmigen Innenmantel 3 (lediglich als Ausschnitt dargestellt) radial nach außen ab. Ebenso stehen vom zylinderförmigen Innenmantel 3 Innenrippen 4 radial nach innen ab.

Der Wärmeaustausch findet derart statt, dass ein erhitztes Gas Wärme an die Innenrippen 4 abgibt, wodurch sich der Wärmetauschereinsatz 1 und damit auch die Außenrippen 2 erwärmen, und Wärme erneut über die Außenrippen 2 an ein zu erwärmendes Gas wie etwa einem vorbeiströmenden Luftstrom abgegeben wird.

Bei diesem bekannten Wärmetauschereinsatz weisen die Außenrippen mehrere an ihren beiden Seiten entlang von Umfangslinien 5a, 5b und 5c abstehende Querstege 6a, 6a', 6b, 6b', 6c, 6c' auf. Die an sich gegenüberliegenden Seiten zweier direkt benachbarter Außenrippen 2, 2' angeordneten Querstege sind auf gemeinsamen Umfangslinien positioniert. So liegen beispielsweise die Querstege 6a und 6a' auf der gemeinsamen Umfangslinie 5a.

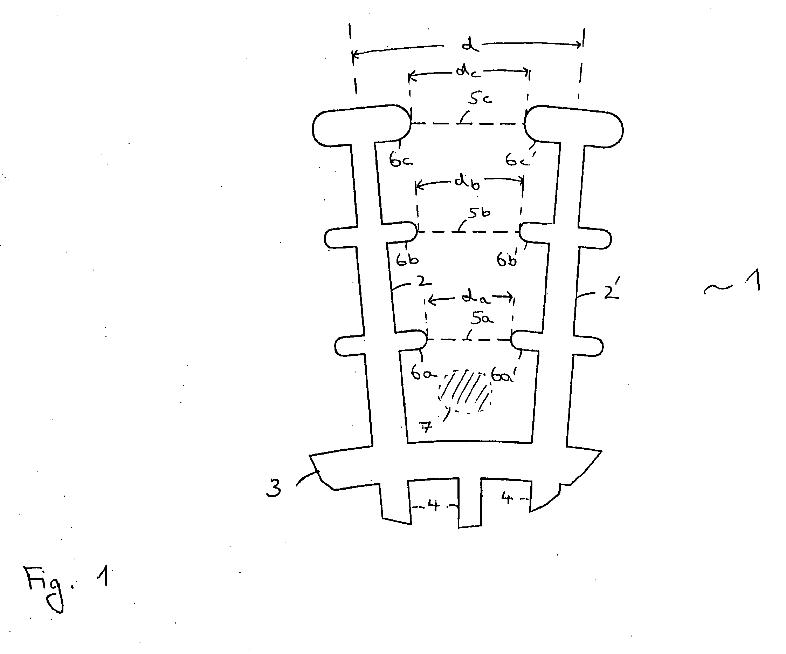

Vereinfacht in Fig. 1 dargestellt ist zudem ein Kernströmungsbereich 7, der sich zwischen den Außenrippen 2, 2', dem Innenmantel 3 als auch den Querstegen 6a, 6a' ausbildet. Weitere Kernströmungsbereiche bilden sich auch radial weiter außen liegend in entsprechenden durch die weiteren Querstege ausgebildeten Bereichen aus. In den Kernströmungsbereichen findet kein unmittelbarer Wärmeaustausch mit dem Wärmetauschereinsatz 1 statt, so dass es wünschenswert ist, das Volumen dieser Kernströmungsbereiche möglichst klein zu halten.

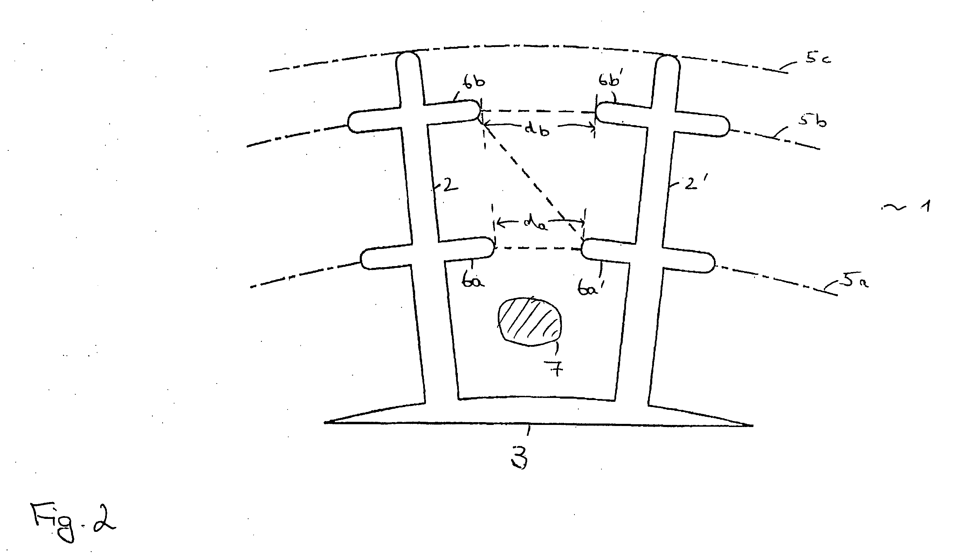

In Fig. 2 ist eine Aufsicht auf einen Teil eines weiteren bekannten Wärmetauschereinsatzes mit Innenmantel 3 und zwei direkt benachbarten Außenrippen 2, 2' dargestellt.

In Übereinstimmung mit dem in Fig. 1 dargestellten Wärmetauschereinsatz liegen die an sich gegenüberliegenden Seiten der beiden direkt benachbarten Außenrippen 2, 2' angeordneten Querstege 6a/6a' sowie 6b/6b' auf jeweils gemeinsamen Umfangslinien 5a, 5b. Im Gegensatz zum bekannten Wärmetauschereinsatz in Fig. 1 weist der in Fig. 2 dargestellte Wärmetauschereinsatz am radialen äußeren Ende entlang der entsprechenden Umfangslinie 5c jedoch keine Querstege auf. Wie schon in der Beschreibung zur Fig. 1 erläutert, können die Abstände dₐ, d_{b} der sich entlang gemeinsamer Umfangslinien 5a, 5b gegenüberliegenden Querstege 6a/6a' sowie 6b/6b' aufgrund der Vorgaben der DIN 17 615 Teil 2 für Strangpressteile nicht beliebig klein gewählt werden. Dadurch sowie aufgrund der schematisch dargestellten Kernströmungen im Kernströmungsbereich 7 wird der Wärmeaustausch unter anderem begrenzt.

Der Erfindung liegt die Aufgabe zugrunde, einen Wärmetauschereinsatz anzugeben, mit dem die bei dem Stand der Technik durch die oben beschriebenen Nachteile hervorgerufenen Einbußen der Wärmeaustauscheffizienz vermieden oder verringert werden können.

Die Aufgabe wird erfindungsgemäß durch einen Wärmetauschereinsatz nach Patentanspruch 1 gelöst. Bevorzugte Ausführungsformen sind unter anderem in den abhängigen Patentansprüchen definiert und/oder werden in der weiteren Beschreibung erläutert.

Erfindungsgemäß wird ein Wärmetauschereinsatz angegeben, mit einem zylinderförmigen Innenmantel und radial nach innen bzw. außen abstehenden Innenrippen und Außenrippen, wobei die Außenrippen jeweils zwei sich gegenüberliegende Seiten aufweisen, die Außenrippen jeweils an wenigstens einer ihrer beiden Seiten wenigstens einen im Wesentlichen in Umfangsrichtung abstehenden Quersteg aufweisen und die von wenigstens einem Paar direkt benachbarter Außenrippen an sich gegenüberliegenden Seiten der beiden Außenrippen angeordneten Querstege radial zueinander versetzt sind.

Ein Aspekt der Erfindung ist es also, den wenigstens einen Quersteg einer Außenrippe so anzuordnen, dass dieser auf einer Umfangslinie angeordnet ist, die verschieden ist von der oder den Umfangslinien des wenigstens einen Querstegs, der gegenüberliegend der direkt benachbarten Außenrippe angeordnet ist. Der Vollständigkeit halber sei erwähnt, dass die Umfangslinie durch die Form des Innenmantels definiert ist. Besitzt der Innenmantel beispielsweise einen runden oder elliptischen Querschnitt, so ist die Umfangslinie kreisrund bzw. elliptisch geformt.

Denkbar ist es, sämtliche Querstege direkt benachbarter Außenrippen radial zueinander zu versetzen. Ebenso ist es jedoch möglich, lediglich einen Teil direkt benachbarter Außenrippen mit radial zueinander versetzten Querstegen auszubilden und den anderen Teil der Querstege direkt benachbarter Außenrippen auf gemeinsamen Umfangslinien anzuordnen, d. h. mit übereinstimmendem radialen Abstand vom Innenmantel. Beispielsweise können in Umfangsrichtung Paare direkt benachbarter Außenrippen mit radial zueinander versetzten Querstegen mit Paaren benachbarter Außenrippen mit nicht radial zueinander versetzten Querstegen alternieren.

Werden die an sich gegenüberliegenden Seiten direkt benachbarter Außenrippen angeordneten Querstege radial zueinander versetzt, wird der Vorteil erzielt, dass die Außenrippen unter Beachtung der eingangs erläuterten Seiten- und Flächenverhältnisse nach DIN 17 615 Teil 2 näher zueinander gerückt werden können, als dies bei direkt benachbarten Außenrippen der Fall ist, bei denen die sich gegenüberliegenden Querstege auf gemeinsamen Umfangslinien positioniert sind. Insbesondere werden Strömungsquerschnitte, die durch den Innenmantel, die Außenrippen sowie die Querstege dimensioniert sind, verkleinert, was wiederum zu kleineren Kanälen für die Ausbildung von Kernströmungen führt und damit eine verbesserte Erwärmung der zwischen den Außenrippen geführten Luftströme ermöglicht. Unter Berücksichtigung der Vorgaben nach DIN 17 615 Teil 2 bezüglich der Seiten- und Flächenverhältnisse von Strangpressbauteilen lässt sich durch radiales Versetzen der Querstege benachbarter Außenrippen durch Zusammenrücken der Außenrippen eine in Summe größere Oberfläche zum Wärmeaustausch mit einer zwischen den Außenrippen geführten Luftströmung angeben, als dies bei herkömmlichen Wärmetauschern der Fall ist.

Bei einer vorteilhaften Ausführungsform sind die Querstege beider Seiten von wenigstens einer der Außenrippen jeweils radial zueinander versetzt. Damit wird die wenigstens eine Außenrippe nicht gleichzeitig von Querstegen entlang einer gemeinsamen Umfangslinie von beiden Seiten her durchsetzt. Trifft dies auf alle Außenrippen zu, so können die Außenrippen ein gemeinsames Profil bezüglich der Anordnung der Querstege aufweisen, und ein radialer Versatz der an sich gegenüberliegenden Seiten direkt benachbarter Außenrippen angeordneten Querstege kann auf diese Weise einfach realisiert werden.

Bei einer weiteren vorteilhaften Ausführungsform sind die Querstege von wenigstens einer der Außenrippen in radialer Richtung alternierend bezüglich der beiden Seiten angeordnet. Dies ermöglicht eine besonders große Oberfläche zum Wärmeaustausch mit einem zu erwärmenden Luftstrom.

Vorteilhaft ist es, die Querstege von wenigstens einer der Außenrippen in radial äquidistanten Abständen anzuordnen. Hierdurch können die Dimensionen der in radialer Richtung benachbarten Strömungskanäle einander angeglichen werden.

Die Außenrippen können über ihren radialen Verlauf eine konstante Dicke aufweisen. Ebenso ist es denkbar, dass die Außenrippen jeweils eine sich in radialer Richtung nach außen verjüngende Dicke aufweisen. Die Dicke bezeichnet den Abstand der sich gegenüberliegenden Seiten einer Außenrippe.

In vorteilhafter Weise weisen die Außenrippen jeweils auf beiden Seiten eine Mehrzahl von Querstegen auf. Hiermit lässt sich die effektive Oberfläche zum Wärmeaustausch mit einer Luftströmung pro Außenrippe vergrößern.

Bei einer weiteren vorteilhaften Ausführungsform weisen die beiden Seiten einer beliebigen der Außenrippen jeweils ein in radialer Richtung wellenförmiges oder zackenförmiges Profil auf. Ein derartiges Profil dient wiederum zur Vergrößerung der effektiven Oberfläche einer Außenrippe, um dadurch eine größere Wärmeübertragungsfläche für den Wärmeaustausch mit einem vorbeiströmenden Luftstrom zu erreichen.

In vorteilhafter Weise sind der Innenmantel, die Außen- und Innenrippen sowie die Querstege als Strangpressteil ausgebildet. Die Geometrie des Wärmetauschers hat somit die Vorgaben der DIN 17 615 Teil 2 zu erfüllen. Trotz der Einschränkungen hinsichtlich der Geometrie des Wärmetauschers lässt sich durch den radialen Versatz sich gegenüberliegender Querstege zweier direkt benachbarter Außenrippen eine besonders große Oberfläche zum Wärmeaustausch bei gegebenem Bauvolumen erzielen.

In vorteilhafter Weise wird ein Luftheizgerät angegeben, mit einer von einem zylinderförmigen Flammrohr gebildeten Brennkammer, einem die Brennkammer umgebenden Außenmantel und einem zwischen Brennkammer und Außenmatel angeordneten und vorstehend erläuterten Wärmetauschereinsatz, wobei ein Raum zwischen dem Innenmantel und dem Flammrohr zum Abführen eines Verbrennungsgases ausgebildet ist und ein weiterer Raum zwischen dem Innenmantel und dem Außenmantel zur Erwärmung eines Luftstroms vorgesehen ist. Das Luftheizgerät findet insbesondere Einsatz in Caravans, Wohnmobilen, Booten oder weiteren mobilen Räumen.

Ein im Flammrohr strömendes Rauchgas wird beispielsweise in den zwischen dem Flammrohr und dem Innenmantel liegenden und von den Innenrippen durchzogenen Raum in entgegengesetzter Richtung umgelenkt, und strömt danach durch eine Abgasführung ins Freie. Hierbei gibt das Verbrennungsgas über die Innenrippen Wärme an den Wärmetauscher ab. Diese Wärme wird an einen zwischen dem Innenmantel und dem Außenmantel hindurchströmenden Luftstrom über die Außenrippen wieder abgegeben. Dabei erwärmt sich die Luft und der erwünschte Heizungseffekt stellt sich ein.

Weitere Aspekte und Vorteile der Erfindung werden aus der nachfolgenden Beschreibung mit Bezug auf die Zeichnungen ersichtlich:
- Fig. 1: zeigt eine schematische Aufsicht auf einen Teil eines bekannten Wärmetauschereinsatzes;
- Fig. 2: zeigt eine schematische Aufsicht auf einen Teil eines weiteren bekannten Wärmetauschereinsatzes;
- Fig. 3: zeigt eine schematische Aufsicht auf einen Teil eines Wärmetauschereinsatzes gemäß einer ersten Ausführungsform der Erfindung; und
- Fig. 4: zeigt eine Aufsicht auf einen Teil eines Wärmetauschereinsatzes gemäß einer zweiten Ausführungsform der Erfindung.

In der folgenden Figurenbeschreibung werden im Zusammenhang mit den Figuren 1 und 2 zum Stand der Technik eingeführte Bezugszeichen zur Kennzeichnung gemeinsamer Figurenelemente übernommen.

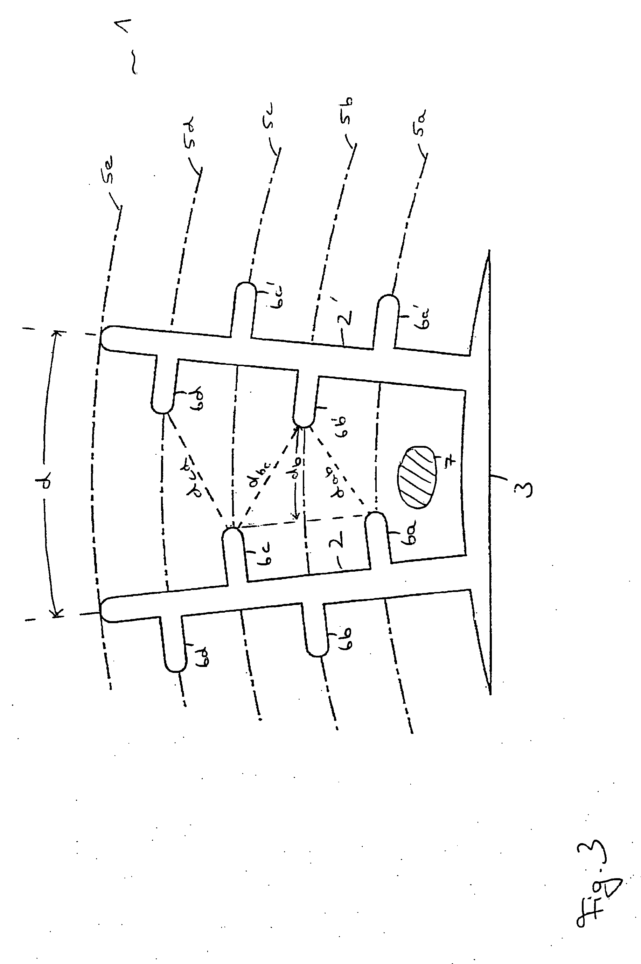

In Fig. 3 ist eine schematische Aufsicht auf einen Teil eines Wärmetauschereinsatzes 1 gemäß einer ersten Ausführungsform der Erfindung dargestellt.

Der dargestellte Teil des Wärmetauschereinsatzes 1 begrenzt sich auf zwei benachbarte Außenrippen 2, 2', die radial von einem Innenmantel 3 abstehen. Im Gegensatz zu den in den Fig. 1 und 2 dargestellten bekannten Wärmetauschereinsätzen, bei welchen Querstege je Außenrippe beidseitig entlang gemeinsamer Umfangslinien abstehen, sind die Querstege bei dieser Ausführungsform je Außenrippe in radialer Richtung alternierend bezüglich der beiden Seiten einer Außenrippe angeordnet. So befinden sich beispielsweise die Querstege 6a, 6b, 6c und 6d der Außenrippe 2 auf verschiedenen Umfangslinien 5a, 5b, 5c und 5d. Ebenso sind die an sich gegenüberliegenden Seiten der beiden Außenrippen 2, 2' angeordneten Querstege 6a, 6b', 6c und 6d' radial zueinander versetzt. So sind diese Querstege auf den voneinander verschiedenen Unfangslinien 5a, 5b, 5c und 5d positioniert.

Bei Ausbildung des Wärmetauschereinsatzes 1 als Strangpressteil sind ebenso die Vorgaben der DIN 17 615 Teil 2 zu berücksichtigen, um einer Überbeanspruchung des Werkzeugs entgegenzuwirken. Für die Werkzeugauslegung ist jedoch eine tatsächliche Werkzeugbreite relevant, etwa durch die tatsächlichen Abstände d_{ab}, d_{bc}, d_{cd} der sich gegenüberliegenden Außenrippen, und nicht etwa ein projizierter Abstand d_{b} zwischen sich gegenüberliegenden Querstegen 6a und 6b'. Dies bringt den Vorteil mit sich, dass der Abstand d direkt benachbarter Außenrippen 2, 2' unter Einhaltung der Vorgaben der DIN 17 615 Teil 2 verkleinert werden kann, was zu einer größeren Anzahl von Außenrippen und damit auch einer größeren für den Wärmeaustausch wirksamen Oberfläche bei gleichen äußeren Abmessungen des Wärmetauschereinsatzes führt.

Gleichzeitig werden gegenüber einem wie in Fig. 1 und 2 dargestellten bekannten Profil eines Wärmetauschereinsatzes 1 die Kernströmungsbereiche verkleinert. Dies bringt den Vorteil mit sich, dass das Volumen der Kernströmungen, die wie oben erläutert nicht am Wärmeaustausch beteiligt sind, verringert werden kann.

Die Erfindung gewährt somit den Vorteil einer Vergrößerung der für den Wärmeaustausch wirksamen Oberfläche der Außenrippen einschließlich Querstegen durch Verkleinerung des Abstands d direkt benachbarter Außenrippen im Vergleich zu herkömmlichen Wärmetauschereinsätzen. Gleichzeitig wird der weitere Vorteil reduzierter Kernströmungen im Vergleich zu herkömmlichen Wärmetauschereinsätzen erzielt.

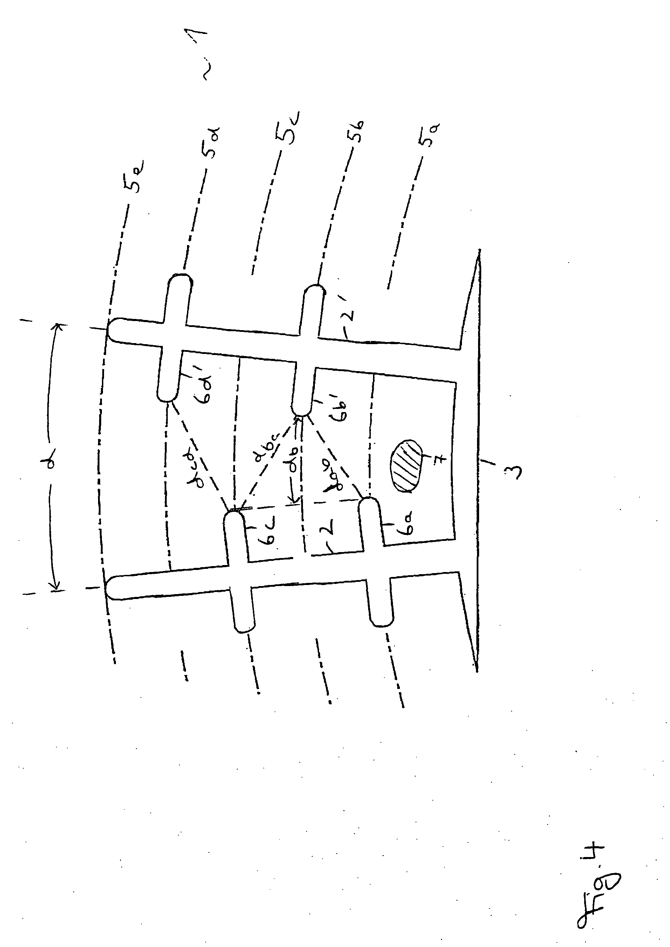

In Fig. 4 ist eine schematische Aufsicht auf einen Teil eines Wärmetauschereinsatzes gemäß einer zweiten Ausführungsform der Erfindung dargestellt.

Im Gegensatz zur in Fig. 3 dargestellten ersten Ausführungsform werden die Querstege 6a, 6c, 6b', 6d' einer zugehörigen Außenrippe 2, 2' jeweils durch einen weiteren Quersteg (ohne Bezugszeichen) ergänzt, der mit dem entsprechenden Quersteg 6a, 6c, 6b', 6d' eine Umfangslinie teilt und auf der gegenüberliegenden Seite derselben Außenrippe 2, 2' angeordnet ist. So weist beispielsweise die Außenrippe 2 entlang der Umfangslinie 5a den Quersteg 6a als auch einen auf der gegenüberliegenden Seite der Außenrippe auf der Umfangslinie 5a angeordneten weiteren Quersteg (ohne Bezugszeichen) auf.

In Übereinstimmung mit der in Fig. 3 dargestellten ersten Ausführungsform sind die Querstege 6a/6c, 6b'/6d' auf den sich gegenüberliegenden Seiten der beiden Außenrippen 2, 2' auf jeweils verschiedenen Umfangslinien 5a, 5b, 5c und 5d positioniert, was wiederum den Vorteil mit sich bringt, dass aufgrund der nicht in Umfangsrichtung verlaufenden tatsächlichen Abstände d_{ab}, d_{bc} und d_{cd} der sich gegenüberliegenden Querstege 6a/6b', 6b'/6c, 6c/6d' unter Berücksichtigung der Vorgaben nach DIN 17 615 Teil 2 eine Reduzierung des Abstandes d direkt benachbarter Außenrippen 2, 2' im Vergleich zu einem wie in Fig. 1 und 2 gezeigten herkömmlichen Profil möglich ist.

## Patentansprüche

1. Wärmetauschereinsatz (1), mit
einem zylinderförmigen Innenmantel (3) und radial nach innen abstehenden Innenrippen (4) bzw. nach außen abstehenden Außenrippen (2. 2'), wobei die Außenrippen (2, 2') jeweils zwei sich gegenüberliegende Seiten aufweisen,
wobei die Außenrippen (2, 2') jeweils an wenigstens einer ihrer beiden Seiten wenigstens einen im Wesentlichen in Umfangsrichtung abstehenden Quersteg (6a, 6b, 6c, 6d, 6a', 6b', 6c', 6d') aufweisen;
**dadurch gekennzeichnet,**
**dass** die Querstege (6a, 6b, 6c, 6d, 6a', 6b', 6c', 6d'), die von wenigstens einem Paar direkt benachbarter Außenrippen (2. 2') an sich gegenüberliegenden Seiten der beiden Außenrippen angeordnet sind, radial zueinander versetzt sind.

2. Wärmetauschereinsatz (1) nach Anspruch 1,
**dadurch gekennzeichnet, dass**
die Querstege (6a, 6b, 6c, 6d, 6a', 6b', 6c', 6d') beider Seiten von wenigstens einer der Außenrippen (2, 2') jeweils radial zueinander versetzt sind.

3. Wärmetauschereinsatz (1) nach Anspruch 2,
**dadurch gekennzeichnet, dass**
die Querstege (6a, 6b, 6c. 6d, 6a', 6b', 6c', '6d') von wenigstens einer der Außenrippen (2, 2'), in radialer Richtung gesehen, alternierend bezüglich der beiden Seiten angeordnet sind.

4. Wärmetauschereinsatz (1) nach Anspruch 3,
**dadurch gekennzeichnet, dass**
die Querstege (6a, 6b, 6c, 6d, 6a', 6b', 6c', 6d') von wenigstens einer der Außenrippen (2, 2') in radial äquidistanten Abständen angeordnet sind.

5. Wärmetauschereinsatz (1) nach einem der vorangehenden Ansprüche,
**dadurch gekennzeichnet, dass**
die Außenrippen (2, 2') jeweils über ihren radialen Verlauf eine konstante Dicke aufweisen.

6. Wärmetauschereinsatz (1) nach einem der Ansprüche 1 bis 4,
**dadurch gekennzeichnet, dass**
die Außenrippen (2, 2') jeweils über ihren radialen Verlauf nach außen eine sich verjüngende Dicke aufweisen.

7. Wärmeaustauschereinsatz (1) nach einem der vorangehenden Ansprüche,
**dadurch gekennzeichnet, dass**
die Außenrippen (2, 2') jeweils auf beiden Seiten eine Mehrzahl von Querstegen (6a, 6b, 6c, 6d, 6a', 6b', 6c', 6d') aufweisen.

8. Wärmetauschereinsatz (1) nach einem der vorangehenden Ansprüche,
**dadurch gekennzeichnet, dass**
die beiden Seiten einer beliebigen der Außenrippen (2, 2') jeweils ein in radialer Richtung wellenförmiges oder zackenförmiges Profil aufweisen.

9. Wärmetauschereinsatz (1) nach einem der vorangehenden Ansprüche,
**dadurch gekennzeichnet, dass**
der Innenmantel (3), die Außen- (2, 2') und Innenrippen (4) sowie die Querstege (6a, 6b, 6c, 6d, 6a', 6b', 6c', 6d') als Strangpressteil ausgebildet sind.

10. Luftheizgerät, mit
einer von einem zylinderförmigen Flammrohr gebildeten Brennkammer, einem die Brennkammer umgebenden Außenmantel und mit einem zwischen Brennkammer und Außenmantel angeordneten Wärmetauschereinsatz (1) gemäß einem der vorangehenden Ansprüche 1 bis 9,
wobei ein Raum zwischen dem Innenmantel (3) und dem Flammrohr zum Abführen eines Verbrennungsgases ausgebildet ist und ein weiterer Raum zwischen dem Innenmantel (3) und dem Außenmantel zur Erwärmung eines Luftstroms vorgesehen ist.

## Claims

1. Heat exchanger insert (1)
with a cylindrically shaped inner sleeve (3), radial inwardly projecting internal ribs (4) and outwardly projecting outer ribs, with the outer ribs (2, 2') each comprising two opposing sides,
whereby the outer ribs (2, 2') at least on one of their two sides comprise at least one cross-member projecting in a circumferential direction (6a, 6b, 6c, 6d, 6a', 6b', 6c', 6d'),
**characterised in that**
the cross-members (6a, 6b, 6c, 6d, 6a', 6b', 6c', 6d') are arranged on opposing sides of the two outer ribs (2, 2') and in a mutually radial manner.

2. Heat exchanger insert (1) in accordance with Claim 1 above,
**characterised in that** the cross-members (6a, 6b, 6c, 6d, 6a', 6b', 6c', 6d') are arranged in a mutually radial manner on both sides of at least one of the external ribs (2, 2').

3. Heat exchanger insert (1) in accordance with Claim 2 above,
**characterised in that**
the cross-members (6a, 6b, 6c, 6d, 6a', 6b', 6c', 6d') of at least one of the outer ribs (2, 2') are arranged alternatingly in respect of both sides.

4. Heat exchanger insert (1) in accordance with Claim 3 above,
**characterised in that** the cross-members (6a, 6b, 6c, 6d, 6a', 6b', 6c', 6d') of at least one of the outer ribs (2, 2') are arranged in equidistant intervals.

5. Heat exchanger insert (1) in accordance with any of the above Claims,
**characterised in that** the outer ribs (2, 2') have a constant thickness over their radial length.

6. Heat exchanger insert (1) in accordance with any of the above Claims 1 to 4,
**characterised in that**
the outer ribs (2, 2') are outwardly tapered over their radial length.

7. Heat exchanger insert (1) in accordance with any of the above claims,
**characterised in that**
the outer ribs (2, 2') comprise on both sides a number of cross-members (6a, 6b, 6c, 6d, 6a', 6b', 6c', 6d').

8. Heat exchanger insert (1) in accordance with any of the above claims,
**characterised in that**
both sides of either of the outer ribs (2,2') have, in each case in a radial direction a wave-shaped or tooth-shaped profile.

9. Heat exchanger insert (1) in accordance with any of the above claims,
**characterised in that**
the inner sleeve (3), the outer ribs (2, 2') and the inner ribs (4) together with the cross-members (6a, 6b, 6c, 6d, 6a', 6b', 6c', 6d') are in the form of extruded pieces.

10. Air heating device with:
a combustion chamber in the form of a cylindrical flame pipe,
an outer jacket enveloping the combustion chamber and with a heat exchanger insert (1) arranged between the combustion chamber and the outer jacket in accordance with any of the claims 1 to 9 above.,
in which a space is arranged between the inner jacket 3 and the flame pipe for the extraction of the exhaust gas and a further space is arranged between the inner jacket (3) and the outer jacket for the purpose of heating an airflow.

## Revendications

1. Echangeur de chaleur (1) avec
une enveloppe intérieure cylindrique (3) et des ailettes intérieures (4) qui dépassent vers l'intérieur et des ailettes extérieures (2, 2') qui dépassent vers l'extérieur, les ailettes extérieures (2, 2') présentant chacune deux côtés opposés,
étant précisé que les ailettes extérieures (2, 2') présentent chacune, sur l'un au moins de leurs deux côtés, au moins une branche transversale (6a, 6b, 6c, 6d, 6a', 6b', 6c', 6d') qui dépasse globalement dans le sens circonférentiel,
**caractérisé en ce que** les branches transversales (6a, 6b, 6c, 6d, 6a', 6b', 6c', 6d') qui sont disposées sur au moins une paire d'ailettes extérieures (2, 2') directement voisines, sur des côtés opposés des deux ailettes extérieures, sont décalées radialement les unes par rapport aux autres.

2. Echangeur de chaleur (1) selon la revendication 1, **caractérisé en ce que** les branches transversales (6a, 6b, 6c, 6d, 6a', 6b', 6c', 6d') des deux côtés de l'une au moins des ailettes extérieures (2, 2') sont décalées radialement les unes par rapport aux autres.

3. Echangeur de chaleur (1) selon la revendication 2, **caractérisé en ce que** les branches transversales (6a, 6b, 6c, 6d, 6a', 6b', 6c', 6d') de l'une au moins des ailettes extérieures (2, 2') sont disposées en alternance par rapport aux deux côtés, vues dans le sens radial.

4. Echangeur de chaleur (1) selon la revendication 3, **caractérisé en ce que** les branches transversales (6a, 6b, 6c, 6d, 6a', 6b', 6c', 6d') de l'une au moins des ailettes extérieures (2, 2') sont équidistantes radialement.

5. Echangeur de chaleur (1) selon l'une des revendications précédentes, **caractérisé en ce que** les ailettes extérieures (2, 2') présentent chacune une épaisseur constante sur leur étendue radiale.

6. Echangeur de chaleur (1) selon l'une des revendications 1 à 4, **caractérisé en ce que** les ailettes extérieures (2, 2') présentent chacune une épaisseur qui va en diminuant vers l'extérieur, sur leur étendue radiale.

7. Echangeur de chaleur (1) selon l'une des revendications précédentes, **caractérisé en ce que** les ailettes extérieures (2, 2') présentent chacune, des deux côtés, plusieurs branches transversales (6a, 6b, 6c, 6d, 6a', 6b', 6c', 6d').

8. Echangeur de chaleur (1) selon l'une des revendications précédentes, **caractérisé en ce que** les deux côtés de l'une quelconque des ailettes extérieures (2, 2') présentent chacun un profil ondulé ou en zigzag dans le sens radial.

9. Echangeur de chaleur (1) selon l'une des revendications précédentes, **caractérisé en ce que** l'enveloppe intérieure (3), les ailettes extérieures (2, 2') et les ailettes intérieures (4) ainsi que les branches transversales (6a, 6b, 6c, 6d, 6a', 6b', 6c', 6d') sont conçues comme une pièce extrudée.

10. Appareil de chauffage à air chaud, avec
une chambre de combustion formée par un tube à flamme cylindrique,
une enveloppe extérieure qui entoure la chambre de combustion, et un échangeur de chaleur (1) selon l'une des revendications 1 à 9 précédentes qui est disposé entre la chambre de combustion et l'enveloppe extérieure,
étant précisé qu'un espace entre l'enveloppe intérieure (3) et le tube à flamme est conçu pour évacuer des gaz de combustion, et qu'un autre espace entre l'enveloppe intérieure (3) et l'enveloppe extérieure est prévu pour chauffer un écoulement d'air.
